# EUROPEAN PATENT APPLICATION

(11) **EP 1 780 115 A2**
(43) Date of publication of application: **02.05.2007**
(21) Application number: 06425735.5
(22) Date of filing: 24.10.2006
(51) Int. Cl.: B63B 21/08

(54) **Pneumatically or hydraulically controlled camcleat**

(30) Priority: 26.10.2005 IT LU20050025
(71) Applicant: Romani, Luca, 55049 Viareggio LU (IT)
(72) Inventor: Romani, Luca, 55049 Viareggio LU (IT)
(74) Representative: Sarpi, Maurizio

(57) **Abstract**

Described herein is a camcleat or device for fastening one or more lines of a watercraft, which comprises mobile-fastening means, movement means for moving said mobile-fastening means, and control means for controlling said movement means.

## Description

The present invention relates to the sector of nautical accessories and in particular to a fastening device designed to facilitate mooring of a watercraft.

More specifically, the invention regards provision of a camcleat device designed to secure one or more lines via the action of mobile-fastening means designed to slide vertically and to block said lines on the deck of the watercraft or on a purposely provided resting base. Said mobile-fastening means are in turn actuated by preferably pneumatic means comprising a piston, which is also designed to slide vertically.

Advantageously, the device described is of small overall dimensions, and is substantially of a hide-away type, given that, once it is positioned at the bow, inside the hull, it leaves in view on the deck, in addition to one or more camcleats proper, only the controls for actuation thereof, which may be manually operated and/or pedal-operated controls.

Traditionally, when a watercraft is to be moored, the first thing is to pick up the bitter end from the mooring and run it over a bow bitt of the watercraft itself, and immediately after also the sternfasts are secured. It is then necessary, in order to counteract possible gusts of wind or simply movement of the water, to tighten the headfast to render the watercraft as stationary and secure as possible.

The above operation is performed, each time, with the aid of the warp (i.e., a rope which, if pulled, is capable of moving the ship towards the point where the other end of the rope itself is fastened) and a smaller piece of line (rattail stopper), but is frequently the cause of accidents and useless muscular effort.

In order to facilitate the mooring operations, manually controlled camcleats have been introduced for some time.

These are made up of a parallelpipedal block within which the line is made to pass, and a toothed lever brake, which, when applied, fastens the line itself in place, hence enabling the latter to be removed from the capstan and to be wound round the bitt. However, said solution, in addition to requiring manual operations, does not enable the line to be released from the camcleat other than by getting it to run throughout its length.

The purpose of the present invention is to overcome the above drawbacks by providing a pneumatically controlled or hydraulically controlled camcleat device, which enables, upon command by a user, fastening of at least one line to be able to remove it from the capstan and to wind it round the bitt, and then enables fast release thereof for subsequent manoeuvres.

The above purpose is achieved by providing a camcleat device or comprising:
- mobile-fastening means;
- movement means for moving said mobile-fastening means; and
- control means for controlling said movement means.

A better understanding of the invention will be obtained from the ensuing detailed description with reference to the attached figures, which illustrate, purely by way of non-limiting example, some preferred embodiments of the invention itself.

In the plate of drawings:
Figure 1 is a front view of a first embodiment of a camcleat, according to the invention, in the resting position;

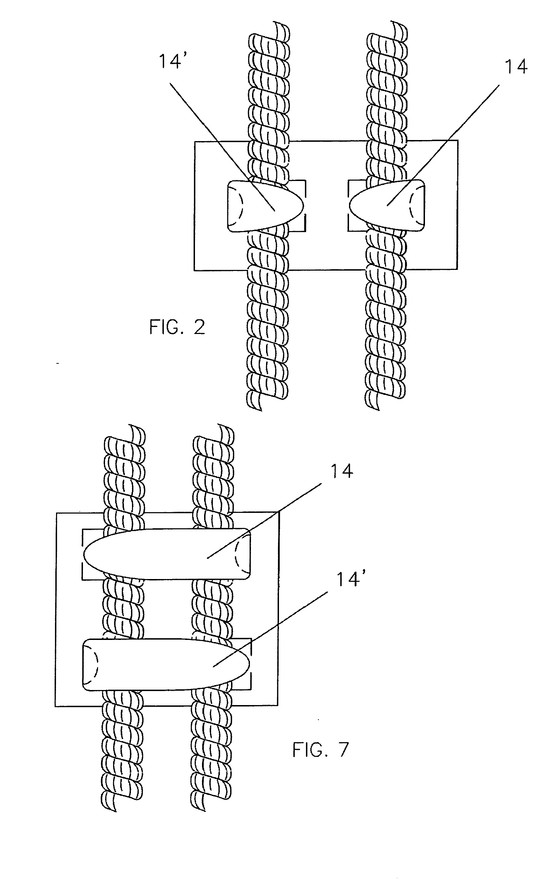

Figure 2 is a view from above of the embodiment of Figure 1 in the working position;
Figure 3 is a view from above of a second embodiment of the invention;
Figure 4 and 5 show a side view of the second embodiment in the working position and in the hide-away resting position, respectively;
Figure 6, corresponding to Figure 5, is a view from above in the resting position; and
Figure 7 is a view from above of a variant of the second embodiment of Figure 3.

With reference to the figures, the camcleat device forming the subject of the invention comprises mobile-fastening means, movement means for moving said fastening means, and control means operated by the user.

In the example of embodiment described, the mobile-fastening means comprise two jaws 12, 12', which can slide in a vertical direction, each of which is shaped substantially like an "L" turned upside down, where the free end of the horizontal arm 14, 14' is preferably curved downwards for fastening at least one line and the free end of the vertical arm is fixed to a bottom cross member 10 mounted on the camcleat device so as to slide vertically.

The means designed to move said sliding jaws 12, 12' vertically upon command imparted by a user comprise a piston 7 able to slide in a vertical direction, which is designed to be connected to said bottom cross member 10 and to move the latter vertically in such a way that said line will be gripped or released.

In other words, in order to fasten the line upon command imparted by the user, the piston 7 acts on the mobile cross member 10 displacing it vertically downwards together with the jaws 12, 12'.

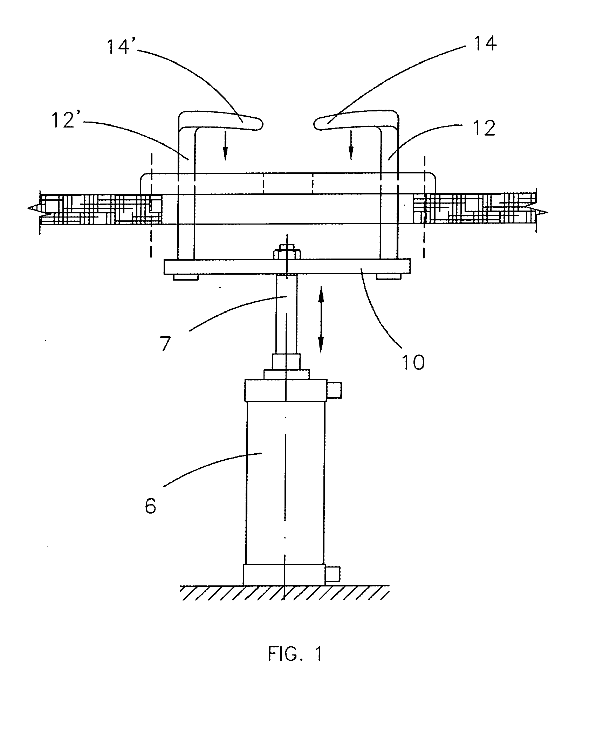

In the first embodiment illustrated in Figure 1, said jaws 12, 12' are positioned in front of one another and have the curved free ends of the horizontal arms 14, 14' set opposed to one another.

The control means for controlling said means for moving the jaws 12, 12' comprise:
- a control valve designed to be connected to said means for moving the mobile-fastening means;
- a pressure-reducer/lubricating filter assembly; and
- an air compressor designed to send pressurized air to said control valve through said filter.

The camcleat comprises - or is connected to - said compressor that sends pressurized air, through the pressure-reducer/lubricating filter, to the control valve ,which is connected to the two opposite ends of a pneumatic cylinder 6.

Sliding vertically in said pneumatic cylinder 6 is the piston 7, which is connected in a known way, preferably via a nut and a hinge, to the aforesaid mobile cross member 10.

For example, the compressor is a 20-litre compressor from which air comes out at 12 bar, and the pressure-reducer filter enables reduction in the pressure of the air at outlet from the compressor from 12 bar to 5-6 bar.

It is on the other hand evident that said pressure-reducer filter may prove superfluous in the case where the pressure of the compressor is in itself adjustable.

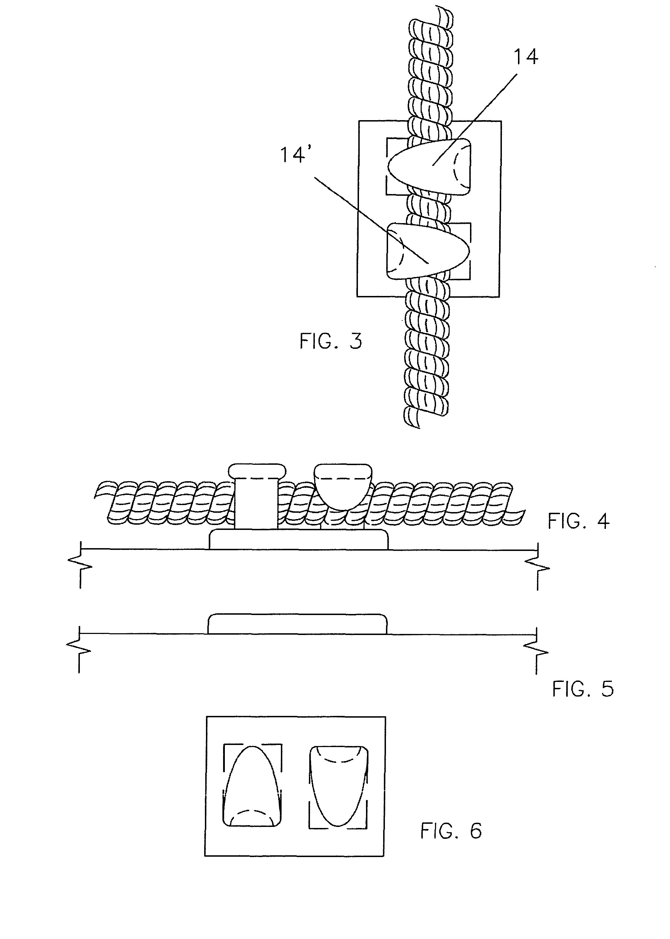

In the second embodiment shown in Figure 3, the two jaws 12, 12' are set alongside one another and parallel, and are constrained to the mobile cross member 10 in such a way that the free end of the horizontal arm of one jaw faces in a direction opposite to the free end of the horizontal arm of the other jaw. In this embodiment, the free ends of each horizontal arm 14, 14' of each jaw 12, 12' are engaged in gripping one and the same line.

Advantageously, as has already been mentioned, it is preferable for the camcleat to be substantially of the type that can be tucked away out of sight within the hull in such a way that, once the line is released upon command imparted by the user, each jaw 12, 12' is slid vertically downwards until the horizontal arms 14, 14' substantially lie on the same plane as the deck of the boat or on a purposely provided resting base constrained to said deck.

It is also possible to envisage that said jaws 12, 12' shaped like an "L" turned upside down are slightly inclined.

Likewise, it is preferable for the horizontal arms 14, 14' of said jaws 12, 12' to be provided with appropriate knurlings on their bottom surface that comes into contact with the line.

Once the line has been recovered on board, it is passed under the horizontal arms 14, 14' of the camcleat and pulled around the capstan in order to secure the boat. With a manually operated or pedal-operated control, the user actuates the piston 7 in such a way that the line will be gripped by the jaws 12, 12', after which he can remove the line from the capstan so as to wind it round the bitt. Once the operation is completed, the piston can be raised again, and the line will be free again but secured to the bitt.

Advantageously, the camcleat enables a reduction in the time required for mooring, avoiding useless muscular effort on the part of the user.

A second advantage lies in the fact that said camcleat substantially does not require any maintenance other than the addition of oil in the pressure-reducer filter 2 when required.

A third advantage is represented by the fact that it is possible to envisage that the speed of the sliding piston 7 is adjustable.

A fourth advantage, as has already been mentioned above, is represented by the fact that the overall dimensions of the camcleat are modest and that the camcleat can be positioned on a watercraft in such a way that only the control valves 3 and the bitt remain in sight.

In a variant of said second embodiment shown in Figure 7, the horizontal arms 14, 14' of each jaw 12, 12' have a length such as to grip two parallel lines.

The present invention has been described and illustrated according to some preferred embodiments and variants, but it is evident that technically and/or functionally equivalent modifications and/or replacements may be made by any person skilled in the branch, without thereby departing from the sphere of protection of the present patent right. For example, a possible variant could regard the possibility of using hydraulic pistons instead of pneumatic ones with an oil pump instead of the compressor 1, or else again it is possible to envisage that said jaws may be moved by mechanical means such as gears/racks or other known mechanical means suitable for the purpose.

## Claims

1. A camcleat or device for fastening one or more lines of a watercraft, **characterized in that** it comprises:
- mobile-fastening means;
- movement means for moving said mobile-fastening means; and
- control means for controlling said movement means.

2. The camcleat according to the preceding claim, **characterized in that** said mobile-fastening means comprise one or more jaws (12, 12') that are able to slide in a vertical direction.

3. The camcleat according to the preceding claim, **characterized in that** said vertically sliding jaws (12, 12') are two in number.

4. The camcleat according to the preceding claim, **characterized in that** each jaw (12, 12') is shaped substantially like an "L" turned upside down, in which the horizontal arm (14, 14') is designed to grip said line, whilst the free end of the vertical arm is fixed to a mobile bottom cross member (10) slidably mounted on the camcleat.

5. The camcleat according to the preceding claim, **characterized in that** the free end of the horizontal arm (14, 14') is curved downwards.

6. The camcleat according to the preceding claim, **characterized in that** said movement means for moving the mobile-fastening means comprise a sliding piston (7) designed to be connected to said mobile bottom cross member (10) and to move the latter vertically in such a way that said line will be fastened or released.

7. The camcleat according to Claim 1, **characterized in that** said control means for controlling said movement means comprise:
- a control valve designed to be connected to said means for moving the mobile-fastening means;
- a pressure-reducer/lubricating filter assembly; and
- an air compressor designed to send pressurized air to said control valve through said filter.

8. The camcleat according to Claim 6 and 7, **characterized in that** the control valve is connected to the two opposite ends of a pneumatic cylinder (6), within which the piston (7) slides.

9. The camcleat according to Claim 4, **characterized in that** the two jaws (12, 12') are positioned in front of one another.

10. The camcleat according to Claim 4, **characterized in that** the two jaws (12, 12') are set alongside one another and parallel to one another, and are constrained to the mobile cross member (10) in such a way that the free end of the horizontal arm (14, 14') of one of said jaws (12, 12') faces in the direction opposite to the free end of the horizontal arm of the other jaw.

11. The camcleat according to the preceding claim, **characterized in that** the horizontal arms (14, 14') of each jaw (12, 12') have a length such as to grip two parallel lines.

12. The camcleat according to Claim 4, **characterized in that** said jaws (12, 12') shaped like an "L" turned upside down are slightly inclined.

13. The camcleat according to any one of the preceding claims, **characterized in that** the horizontal arms (14, 14') of each jaw (12, 12') are provided with one or more knurlings on their surface that comes into contact with the line.
